# FASCICULE DE BREVET EUROPEEN

(11) **EP 1 301 389 B1**
(45) Date de publication et mention de la délivrance du brevet: **10.10.2007**
(21) Numéro de dépôt: 01984325.9
(22) Date de dépôt: 18.07.2001
(51) Int. Cl.: B62K 27/00, B62K 27/14

(54) **REMORQUE POUR UN VEHICULE DEUX-ROUES**
ANHÄNGER FÜR ZWEIRADFAHRZEUG
TWO-WHEELED VEHICLE TRAILER

(30) Priorité: 21.07.2000 FR 0009616
(43) Date de publication de la demande: 16.04.2003
(73) Titulaire: Witschi, Christophe, 56420 Plaudren (FR)
(72) Inventeur: Witschi, Christophe, 56420 Plaudren (FR)
(74) Mandataire: Bentz, Jean-Paul
(86) Numéro de dépôt international: PCT/FR2001/002331
(87) Numéro de publication internationale: WO 2002/008049

(56) Documents cités:
- DE-U- 29 922 832
- FR-A- 949 716
- GB-A- 2 308 833
- US-A- 4 511 155
- US-A- 5 330 217
- US-B1- 6 182 990

## Description

La présente invention concerne une remorque pour un véhicule deux-roues.

Une telle remorque est utilisée pour permettre au conducteur du véhicule deux-roues de transporter des charges additionnelles telles que des bagages.

On connaît des équipements pour véhicule deux-roues destinés à transporter des bagages. Ils sont en général portés par la partie arrière supérieure du véhicule deux-roues, entraînant des déséquilibres importants lorsque le véhicule est en marche. De tels équipements peuvent par exemple se présenter sous la forme de caisses montées à l'arrière du véhicule. Ces caisses ont des moyens d'accrochage particuliers selon le type de véhicule deux-roues, et leur installation sur le véhicule se révèle souvent fastidieuse. Le document brevet DE-U-29922832 décrit notamment des moyens d'accrochage comprenant deux bras venant s'accrocher par leur extrémité avant aux extrémités de l'arbre de rotation de la roue arrière du véhicule. Les deux bras constituent une structure rigide en U. L'écartement entre les deux bras est fixe, et l'accrochage des bras est réalisé au moyen d'embouts télescopiques montés sur l'axe de la roue arrière. Par ailleurs, la contenance volumique de ces caisses est nécessairement réduite. En outre, ces caisses nuisent aux qualités esthétiques du véhicule deux-roues qui en est pourvu.

Le but de la présente invention est de résoudre les problèmes précités, en proposant un dispositif de transport de charges additionnelles pour un véhicule deux-roues adaptable à tous types de véhicules deux-roues, rapide à monter et à démonter, et surtout assurant au véhicule de bonnes conditions d'équilibre lors de son utilisation.

A cet effet, la présente invention vise une remorque pour un véhicule deux-roues comprenant des moyens d'accrochage sur le véhicule.

Selon l'invention qui est définie selon les termes de la revendication 1, les moyens d'accrochage de la remorque sur le véhicule sont agencés sous la forme d'une pince comprenant deux bras dont les extrémités avant sont conformées pour coopérer avec les extrémités de l'arbre de rotation de la roue arrière du véhicule, et la remorque comporte des moyens de serrage desdits bras adaptés à maintenir les extrémités avant desdits bras en prise avec les extrémités de l'arbre de rotation de la roue arrière du véhicule.

Ainsi, l'accrochage de la remorque sur le véhicule s'effectue sur l'arbre de rotation de la roue arrière du véhicule, ce qui permet au véhicule équipé de la remorque de conserver ses qualités d'équilibre. L'agencement sous forme de pince des moyens d'accrochage de la remorque permet d'installer la remorque rapidement et sans efforts, en agissant uniquement sur les moyens de serrage des bras.

Selon une caractéristique préférée de l'invention, chacun des bras de la pince porte en son extrémité avant un embout conformé pour coopérer avec une extrémité de l'arbre de rotation de la roue arrière du véhicule, ledit embout étant démontable et libre en rotation par rapport audit bras.

Ainsi, la remorque pourra s'adapter à tous les types de véhicules existants, il suffira pour l'utilisateur de choisir un embout adapté à l'extrémité de l'arbre de rotation de son véhicule.

Selon une autre caractéristique préférée de l'invention, la remorque comporte en sa partie avant un support d'attelage comprenant lesdits moyens d'accrochage et lesdits moyens de serrage, et en sa partie arrière un châssis articulé par rapport audit support d'attelage et portant une roue.

Ainsi, l'articulation dudit châssis par rapport au support d'attelage permet au véhicule équipé de la remorque de conserver ses qualités d'équilibre, notamment dans les trajectoires curvilignes, et permet en outre de limiter les contraintes exercées par la charge additionnelle sur le véhicule grâce à la possibilité d'ajouter au dispositif des amortisseurs entre le support d'attelage et le châssis.

Dans un premier mode de réalisation de l'invention, lesdits bras sont articulés, et lesdits moyens de serrage comprennent une sangle adaptée à entourer lesdits bras articulés.

Ainsi, le serrage de la pince s'effectue de manière simple. Ce mode de réalisation pratique et peu coûteux est particulièrement bien adapté à un véhicule deux-roues du genre bicyclette.

Dans un deuxième mode de réalisation, lesdits bras sont ici encore articulés, et lesdits moyens de serrage comportent deux cames de manoeuvre solidaires d'un axe de transfert horizontal, respectivement couplées en appui sur les extrémités arrière des deux bras, et la remorque comporte en outre des moyens d'immobilisation desdites cames sur le support d'attelage.

Avantageusement, les moyens d'immobilisation peuvent être un frein agissant sur une poignée commandant l'une des deux cames de manoeuvre. Ainsi, il suffit d'agir sur la poignée pour serrer les deux bras sur la roue arrière du véhicule. De plus, le système de transfert par les cames permet une fiabilité et une robustesse particulièrement bien adaptées à un véhicule deux-roues du genre motocyclette destiné à rouler à des vitesses élevées.

Avantageusement, ledit support d'attelage de la remorque pour moto .comporte une partie centrale et deux parties mobiles situées de part et d'autre de ladite partie centrale et adaptées à se déplacer le long d'une tige horizontale de guidage portée par ladite partie centrale, ladite partie centrale comportant en outre des moyens de réglage de l'écartement entre lesdites parties mobiles.

Ainsi, cette possibilité de réglage de la largeur du support d'attelage permet d'adapter l'amplitude de l'écartement de la pince aux dimensions de la roue arrière du véhicule deux-roues. On pourra adapter la remorque à tous les types de véhicules deux roues.

Dans une troisième forme de réalisation, lesdits bras des moyens d'accrochage dudit support d'attelage ont leur extrémité arrière formant une tête montée coulissante sur une tige transversale, lesdits moyens de serrage déplaçant symétriquement lesdits bras en écartement ou en rapprochement l'un de l'autre.

Avantageusement, les extrémités coulissantes desdits bras sont des têtes engagées sur ladite barre transversale, qui assurent au serrage un blocage de "serre-joint". Les moyens de serrage peuvent quant à eux comporter une tige à filetages inversés engagés respectivement dans chacun desdits bras.

Selon une autre caractéristique préférée de l'invention, ledit châssis comportant une poutre comprenant un tronçon avant et un tronçon arrière de section différentes, les deux tronçons sont adaptés à coulisser l'un dans l'autre en donnant audit châssis une structure télescopique, et la remorque comporte en outre des moyens de blocage des deux tronçons avant et arrière l'un par rapport à l'autre.

Avantageusement, la remorque comporte un coffre porté par ledit châssis, et ledit coffre comprend un caisson avant et un caisson arrière de sections différentes et adaptés à coulisser l'un dans l'autre.

Avantageusement, ledit caisson avant est porté par le tronçon avant dudit châssis, ledit caisson arrière étant porté par le tronçon arrière dudit châssis.

Ainsi, la structure "télescopique" que présentent le châssis et le coffre porté par le châssis offre la possibilité d'un réglage de la contenance volumique de la remorque.

Les caractéristiques et avantages ressortiront d'ailleurs de la description qui va suivre, donnée à titre d'exemple en référence aux dessins annexés parmi lesquels :
la Fig. 1 est une vue de dessus d'une remorque selon un premier mode de réalisation de l'invention en position de pré-accrochage sur la roue arrière d'un véhicule deux-roues ;
la Fig. 2 est une vue analogue à la Fig. 1, la remorque étant ici en position d'accrochage sur la roue arrière du véhicule
la Fig.3 est une vue partielle de dessus d'un second mode de réalisation d'une remorque selon l'invention, en position d'accrochage sur la roue arrière d'un véhicule deux roues et représentée en coupe selon I-I de la Fig. 5 ;
la Fig. 4 est une vue en coupe partielle de cette même remorque en position de pré-accrochage sur la roue arrière d'un véhicule deux-roues ;
la Fig. 5 est une vue en élévation de cette remorque ;
la Fig. 6 est une vue en élévation de la remorque de la Fig. 5 pourvue d'un coffre et dans sa position d'allongement minimal;
la Fig. 7 est une vue analogue à la Fig. 6, la remorque étant ici dans sa position d'allongement maximal;
la Fig. 8 est une vue en élévation représentant un troisième mode de réalisation d'une remorque selon l'invention, attelée à la roue arrière d'un véhicule deux-roues;
la Fig. 9 est une vue schématique de dessus représentant le support d'attelage de la remorque de la Fig. 8 ;
la Fig. 10 est une vue schématique en perspective de dessus représentant outre des éléments du support d'attelage, des éléments de châssis et la fourche de roue de la remorque de la Fig. 8 ; et
les Figs. 11 et 12 sont des vues en élévation semblables à la Fig. 8, représentant une version rallongée de la remorque de la Fig. 8, et illustrant l'état stable et un état sous sollicitation de ses amortisseurs.

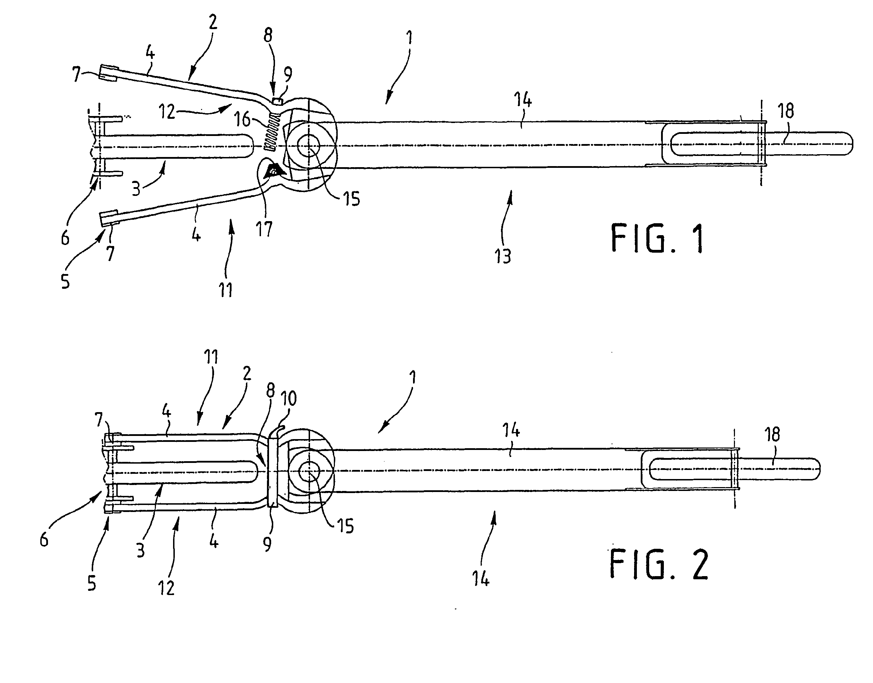

Sur les Figs. 1 et 2, une remorque 1 selon un premier mode de réalisation de l'invention comprend des moyens d'accrochage 2 sur la roue arrière 3 d'un véhicule deux-roues, ici une bicyclette. Lesdits moyens d'accrochage 2 sont agencés sous la forme d'une pince comprenant deux bras articulés 4 dont les extrémités avant 5 sont conformées pour coopérer avec les extrémités 6 de l'arbre de rotation de la roue arrière 3 du véhicule deux-roues comme visible sur la Fig. 2, sur laquelle est représentée la remorque 1 en phase d'accouplement sur le véhicule deux-roues. Plus précisément, chaque bras articulé 4 porte en son extrémité avant 5 un embout 7 conformé pour coopérer avec une extrémité 6 de l'arbre de rotation de la roue arrière 3 du véhicule deux-roues. Ledit embout 7 est démontable et libre en rotation par rapport audit bras articulé 4.

La remorque 1 comporte des moyens de serrage 8 desdits bras articulés 4 adaptés à maintenir les extrémités avant 5 desdits bras articulés 4 en prise avec les extrémités 6 de l'arbre de rotation de la roue arrière du véhicule deux-roues, comme représenté à la Fig. 2.

Dans le mode de réalisation de l'invention tel qu'il est représenté aux Figs. 1 et 2, lesdits moyens de serrage 8 comprennent une sangle 9 adaptée à entourer lesdits bras articulés 4 (Fig. 2). Lesdits moyens de serrage 8 comprennent, outre ladite sangle 9, un crochet 10 adapté à maintenir ladite sangle 9 en position de serrage autour desdits bras articulés 4 (Fig. 2). Ce crochet 10, porté par la sangle 9, vient bloquer cette même sangle 9 dans sa position de serrage.

Ladite remorque 1 comporte en sa partie avant 11 un support d'attelage 12 comprenant lesdits moyens d'accrochage 2 et lesdits moyens de serrage 8, et en sa partie arrière 13 un châssis 14 articulé par rapport au support d'attelage .12 et portant une roue 18.

Ici, le châssis 14 est libre en rotation autour d'un mât d'articulation 15. Ce mât 15 est vertical et porté par ledit support d'attelage 12. Lesdits bras 4 sont articulés autour de ce même mât 15.

Dans ce même mode de réalisation, l'un desdits bras articulés 4 porte un ressort 16 (Fig. 1) adapté à se comprimer contre une butée de caoutchouc 17 portée par l'autre desdits bras 4 en position de serrage de la sangle 9 telle que représentée à la Fig. 2. Ledit ressort 16 est adapté à solliciter la pince à l'écartement lors du desserrage de ladite sangle 9, amenant ainsi la pince de sa position d'accouplement telle que représentée à la Fig. 2 jusqu'à une position de dégagement telle que visible à la Fig. 1 lors du desserrage de la sangle 9.

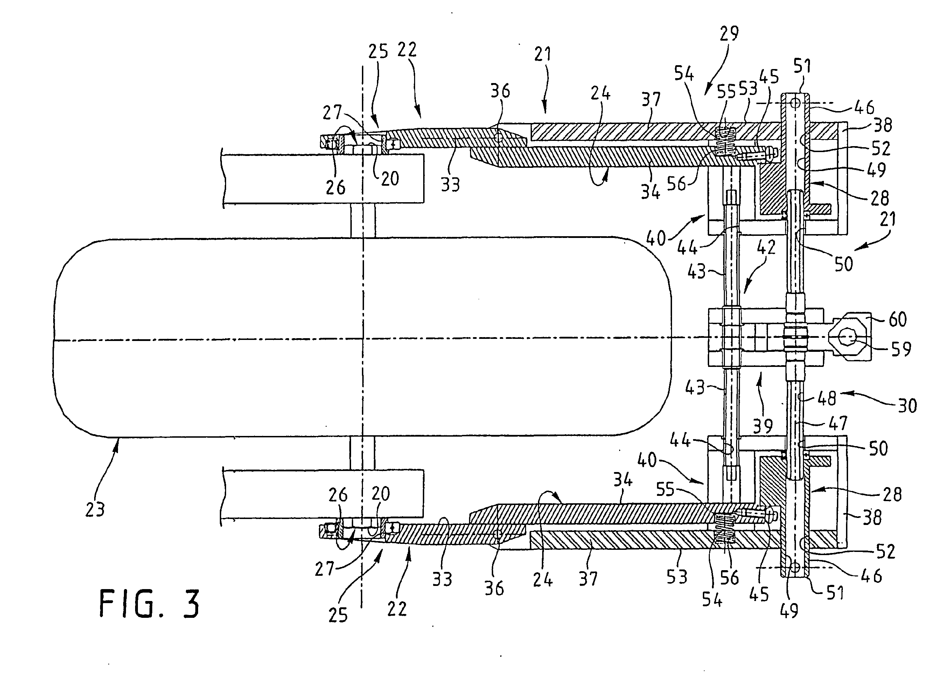

Sur les Figs. 3, 4, 5, 6, 7 est représentée une remorque 21 selon un second mode de réalisation de l'invention comprenant des moyens d'accrochage 22 sur la roue arrière 23 d'un véhicule deux-roues, ici une motocyclette.

Sur la Fig. 3, lesdits moyens d'accrochage 22 apparaissent agencés sous la forme d'une pince comprenant deux bras articulés 24 dont les extrémités avant 25 sont conformées pour coopérer avec les extrémités 26 de l'arbre de rotation de la roue arrière 23 du véhicule deux-roues. Plus précisément, chaque bras articulé 24 porte en son extrémité avant 25 un embout 27 conformé pour coopérer avec une extrémité 26 de l'arbre de rotation de la roue arrière 23 du véhicule deux-roues. Ledit embout 27 est démontable et libre en rotation par rapport audit bras articulé 24, et présente une empreinte complémentaire d'un écrou 20 coiffant l'extrémité 26 de l'arbre de rotation de la roue arrière 23 du véhicule deux-roues.

La remorque 21 comporte des moyens de serrage 28 desdits bras articulés 24 portés par le support d'attelage et adaptés à maintenir les extrémités avant 25 desdits bras articulés 24 en prise avec les extrémités 26 de l'arbre de rotation de la roue arrière du véhicule deux-roues, comme représenté à la Fig. 3 où la remorque 21 est accouplée au véhicule deux-roues.

Ladite remorque 21 comporte en sa partie avant 29 un support d'attelage 30 comprenant lesdits moyens d'accrochage 22 et lesdits moyens de serrage 28, et en sa partie arrière 31 un châssis 32 articulé par rapport audit support d'attelage 30 et portant une roue 57.

Chaque bras articulé 24 comporte ici deux longerons 33 et 34, le premier longeron 33 constituant l'avant du bras 24, le second longeron 34 constituant l'arrière dudit bras 24 dans le prolongement dudit premier longeron 33. Ledit longeron 33 porte ledit embout 27. Ces deux longerons 33 et 34 sont rendus solidaires par deux vis 35.

Ledit support d'attelage 30 comprend deux supports de bras 38, chaque dit support de bras comprenant un montant 37, les deux montants 37 de la remorque étant destinés à prendre place de part et d'autre de la roue arrière 23. Chaque bras articulé 24 est porté par l'un de ces deux montants 37 et s'articule à celui-ci en un point intermédiaire 36 situé à la jonction des deux longerons 33 et 34 du bras 24.

Ledit support d'attelage comporte une partie centrale 39 et deux parties mobiles 40 comprenant lesdits montants 37, situées de part et d'autre de cette partie centrale 39. Chaque partie mobile 40 est constituée de l'association du support de bras 38, comprenant le montant 37, et des moyens d'accrochage 22 et des moyens de serrage 28.

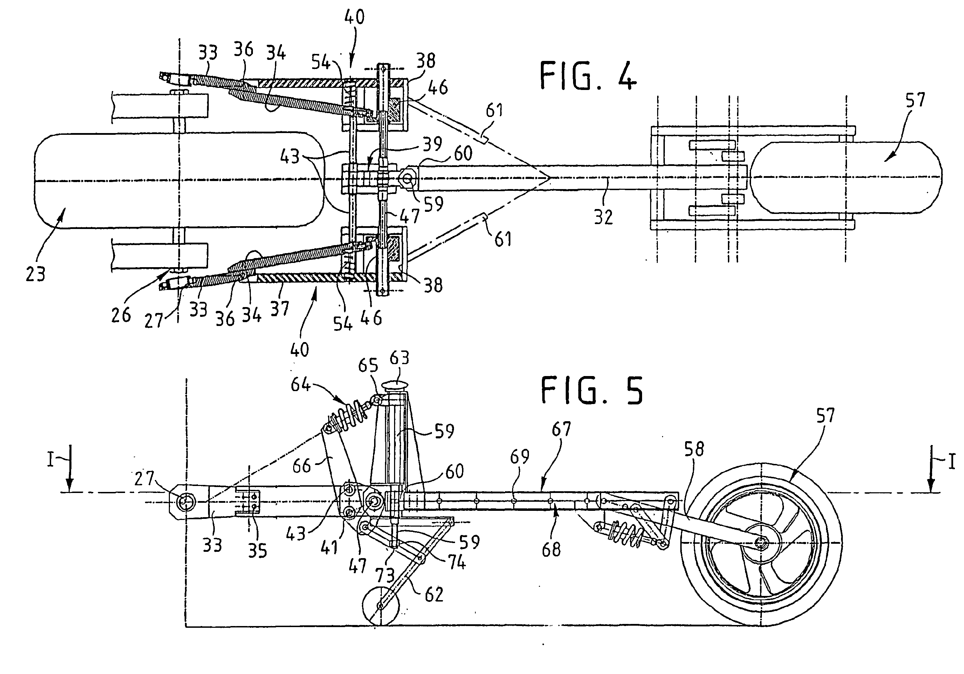

Les parties mobiles 40 sont adaptées à se déplacer le long d'une tige horizontale de guidage 41 (Fig. 5) portée par ladite partie centrale 39. Ladite partie centrale 39 comporte en outre des moyens 42 de réglage de l'écartement entre lesdites parties mobile 40.

Ici, lesdits moyens 42 de réglage d'écartement comprennent une tige de réglage 43 filetée, portée par ladite partie centrale 39 et adaptée à coopérer avec un taraudage 44 ménagé dans chaque support de bras 38. La tige de réglage 43 est rendue solidaire en rotation de la partie centrale 39 lors de l'utilisation de la remorque grâce à un système de vis (non représenté).

Dans le mode de réalisation représenté à la Fig. 3, lesdits moyens de serrage 28 sont un mécanisme d'écartement desdits bras articulés 24, porté par le support d'attelage 30 et coopérant avec les extrémités arrière 45 des bras 24. Ils sollicitent lesdits bras 24 à l'écartement. Plus précisément, lesdits moyens de serrage 28 comportent deux cames de manoeuvre 46 solidaires d'un axe de transfert horizontal 47, respectivement couplées en appui sur les deux extrémités arrière 45 des deux bras 24. L'axe de transfert 47 comportent sur sa surface externe deux méplats 48 adaptés à coopérer avec deux méplats ménagés sur le contour d'un orifice interne 49 de chaque came de manoeuvre 46. Les cames 46 et l'axe de transfert 47 sont ainsi solidaires en rotation. L'axe de transfert 47 est porté par la partie centrale 39 du support d'attelage 30 et traverse un orifice 50 ménagé dans le support de bras 38. Chaque came 40 débouche en son extrémité extérieure 51 par un orifice 52 ménagé dans le flan extérieur 53 du montant 37.

Ladite remorque 21 comporte en outre des moyens d'immobilisation (non représentés) de ladite came 46 sur le support d'attelage 30. Ces moyens d'immobilisation prennent place en l'extrémité extérieure 51 de ladite came 46. Ici, ces moyens d'immobilisation comprennent une poignée (non représentée) portée par l'extrémité 51 de la came de manoeuvre 46 et adaptée à venir prendre appui sur le flan extérieur 53 du montant 37 du support d'attelage 30. Les moyens d'immobilisation pourront comprendre en outre un frein adapté à bloquer ladite poignée lors de l'utilisation de la remorque 21.

Ledit support d'attelage 30 comporte deux ressorts 54 sollicitant respectivement les extrémités arrières 45 des deux bras 24 à l'ouverture de la pince. Ici chaque ressort prend place dans deux cavités 55 et 56 respectivement ménagées sur le flanc intérieur du montant 37 et sur l'extrémité arrière du bras articulé 24. En position de serrage de la came telle que représenté sur la Fig. 3, ledit ressort 54 se trouve comprimé entre le montant 37 et l'extrémité arrière 45 du bras 24, chaque extrémité arrière 45 du bras 24 est ainsi sollicitée contre la came 46 par le ressort 54.

Sur la Fig. 4, le ressort 54 se trouve détendu en position de desserrage de la came de manoeuvre 46. La détente du ressort 54 lors du desserrage de la came 46 déclenche l'ouverture de la pince et la séparation entre l'extrémité avant 25 du bras articulé 24 et l'arbre de la roue arrière 23 du véhicule, comme visible sur la Fig. 4.

La remorque comprend un système d'amortisseurs entre la roue 57 et le châssis 32. Une fourche 58 relie l'extrémité de l'arbre de rotation de la roue 57 au châssis 32. Cette fourche 58 est équipée d'un amortisseur articulé placé en dessous du châssis 32 (Fig. 5).

Sur la Fig. 4, la partie centrale 39 du support d'attelage 30 porte un mât d'articulation 59 pour ledit châssis 32. Ce mât vertical 59 constitue un axe de rotation pour ledit châssis 32. L'extrémité avant 60 dudit châssis 32 comprend un orifice adapté à coopérer avec une partie du mât d'articulation 59.

Deux amortisseurs à gaz 61 sont disposés sur le châssis, chaque amortisseur 61 étant disposé entre le châssis et chaque partie mobile 40 dudit support d'attelage 30.

Ledit axe de transfert 47 constitue un axe horizontal d'articulation pour ledit châssis 32. En effet l'extrémité avant 60 du châssis 32 est en appui sur la partie centrale 39 du support d'attelage 30, lequel entoure une partie de l'axe de transfert 47, ladite partie centrale 39 étant libre en rotation par rapport audit axe de transfert 47.

Sur la Fig. 5, ladite partie centrale 39 comporte une béquille 62 articulée comprenant un taraudage 73 adapté à coopérer avec un filetage 74 ménagé sur une extrémité inférieure dudit mât d'articulation 59. Une molette 63 coiffant l'extrémité supérieur du mât d'articulation 59 est adaptée à déplacer en rotation ledit mât d'articulation 59, agissant ainsi sur la course de la béquille 62.

En outre la remorque 21 comporte un amortisseur 64 entre un bras 65 solidaire du mât vertical d'articulation 59 et un bras 66 solidaire de ladite partie centrale 39.

Sur la Fig. 5, ledit châssis 32 comprend une poutre 67 comprenant un tronçon avant et un tronçon arrière de sections différentes. Les deux tronçons sont adaptés à coulisser l'un dans l'autre donnant ainsi audit châssis une structure "télescopique". Des moyens de blocage 68 permettent d'immobiliser les deux tronçons l'un par rapport à l'autre. Lesdits moyens de blocage 68 comprennent des axes montés sur ressorts (non représentés), faisant office de goupilles venant coopérer avec des orifices 69 ménagés dans les flans de la poutre 67.

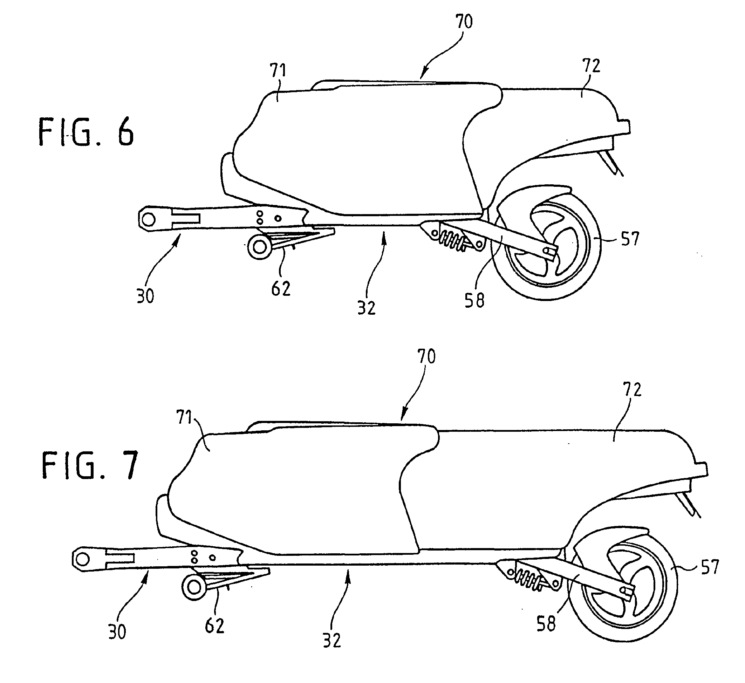

Sur les Figs. 6 et 7, un coffre 70 porté par ledit châssis 32 épouse en sa partie arrière le profil de la roue 57 de la remorque 21. Ledit coffre 70 comprend un caisson avant 71 et un caisson arrière 72 de sections différentes et adaptés à coulisser l'un dans l'autre. Ledit caisson avant 71 est porté par ledit tronçon avant dudit châssis 32, et le caisson arrière 72 par ledit tronçon arrière dudit châssis 32. La Fig. 7 montre la position d'allongement maximal du coffre 70 et du châssis 32.

Lors de l'installation sur un véhicule deux-roues de la remorque 1 selon le premier mode de réalisation de l'invention, l'utilisateur amène les bras 4 de la remorque 1 face à la roue arrière 3 de son véhicule deux-roues jusqu'à ce que les embouts 7 coopèrent avec les extrémités 6 de l'arbre de rotation de la roue arrière 3 du véhicule. Puis il serre la sangle 9 autour des bras et la bloque grâce au crochet 10. Lors du démontage de la remorque 1, il lui suffit d'agir à nouveau sur le crochet 10 pour desserrer la sangle 9. Le ressort 16, en se détendant, permet l'ouverture de la pince et les bras 4 s'écartent alors de la roue arrière 3 du véhicule.

Lors de l'installation sur un véhicule deux-roues d'une remorque 21 selon le second mode de réalisation de l'invention, l'utilisateur procède de manière similaire. Il commence néanmoins par régler l'écartement entre les parties mobiles 40 du support d'attelage 30 agissant sur la tige de réglage 43. Pour cela il ôte les deux vis (non représentées) liant la tige 43 à la partie centrale 39, puis avec une clé il fait tourner la tige 43, la rotation de cette tige filetée 43 entraînant le déplacement en translation des parties mobiles 40 par l'action de filetage de la tige sur le taraudage de chaque partie mobile 40. Il ajuste l'amplitude de l'écartement entre les parties mobiles 40 aux dimensions de la roue arrière 23 de son véhicule. Puis il serre les bras 24 en agissant sur les moyens d'immobilisation de la came 46, amenant ainsi l'embout 27 du bras 24 à coopérer avec l'extrémité 26 de l'arbre de rotation de la roue 23. Il aura pris soin auparavant de choisir un embout 27 complémentaire de l'extrémité de l'arbre de rotation de son véhicule. Le second bras 24 est serré simultanément au premier bras grâce au transfert de couple effectué par l'axe de transfert 47 qui permet à l'utilisateur d'actionner les deux cames simultanément. Pour démonter la remorque 21, il lui suffit d'agir sur les moyens d'immobilisation des cames 46, les ressorts 54 se détendent alors entraînant l'écartement des bras 24.

Ainsi, la remorque selon l'invention permet une installation rapide et simple.

Avantageusement, l'embout 27 est démontable puisqu'il est monté sur l'extrémité avant 25 du bras 24 par des vis, ou bien simplement emboîté.

Ainsi, l'utilisateur pourra facilement changer l'embout 27 selon le véhicule qu'il souhaite équiper de la remorque 21, la remorque s'adaptant à tous types de véhicule deux-roues.

Avantageusement, lors du démontage de la remorque 21 selon le second mode de réalisation de l'invention, l'utilisateur pourra simultanément agir sur la molette 63 commandant la béquille 62 afin de stabiliser la remorque 21 qui repose à l'arrêt sur cette béquille 62.

Avant d'installer la remorque 21 sur le véhicule deux-roues, l'utilisateur peut avantageusement adapter le volume du coffre 70 à la charge additionnelle qu'il souhaite transporter. Il lui suffit pour cela de retirer les moyens de blocage 68 liant les deux tronçons du châssis 32 et de déplacer les deux tronçons l'un par rapport à l'autre jusqu'à obtenir la longueur du châssis 32 souhaitée. Puis il replace les moyens de blocage 68 dans les orifices 69 sur les flans du châssis 32 pour bloquer les tronçons lors de l'utilisation de la remorque. Il place alors le coffre avant 71 sur le longeron avant du châssis 32 grâce à un système de fixation (non représenté), puis le coffre arrière 72 sur le tronçon arrière du châssis 32, les deux caissons étant ainsi emboîtés l'un dans l'autre.

Ainsi, l'utilisateur peut faire varier le volume de son coffre 70 selon ses besoins.

Lors de la mise en oeuvre de la remorque selon le second mode de réalisation de l'invention, lesdits amortisseurs à gaz 61 permettent avantageusement de limiter l'amplitude de la rotation du châssis 32 par rapport au support d'attelage 30 et les effets de vibration du châssis 32 à des vitesses élevées du véhicule deux-roues, connus sous le nom de guidonage, sont atténués grâce à la présence de ces amortisseurs 61. En outre la présence de l'amortisseur 64 permet avantageusement de limiter les contraintes exercées par la remorque 21 sur l'arbre de rotation de la roue arrière 23 du véhicule lors de l'utilisation de la remorque 21.

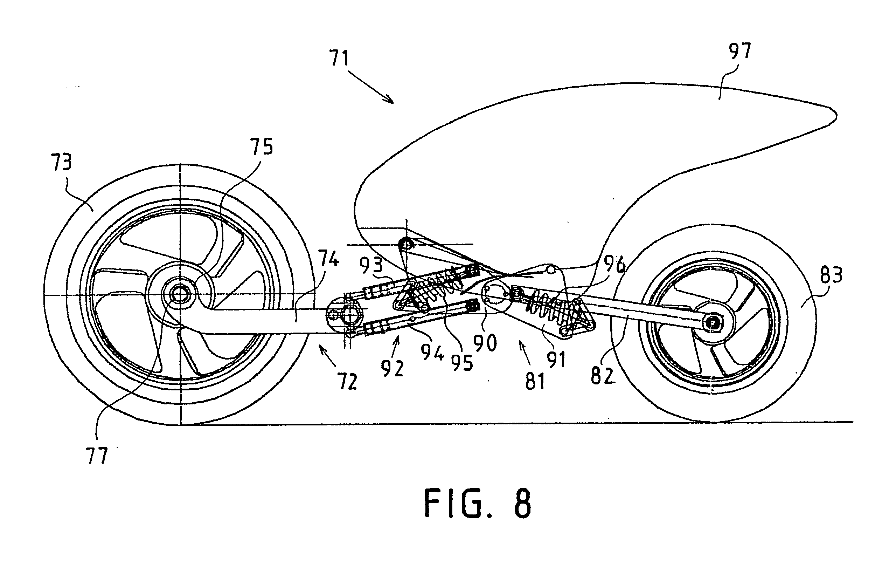

Sur les Figs. 8 à 12, est représentée une remorque 71 selon un troisième mode de réalisation de l'invention, comprenant des moyens d'accrochage 72 sur la roue arrière 73 d'un véhicule deux-roues, s'agissant comme dans l'exemple précédent d'une motocyclette.

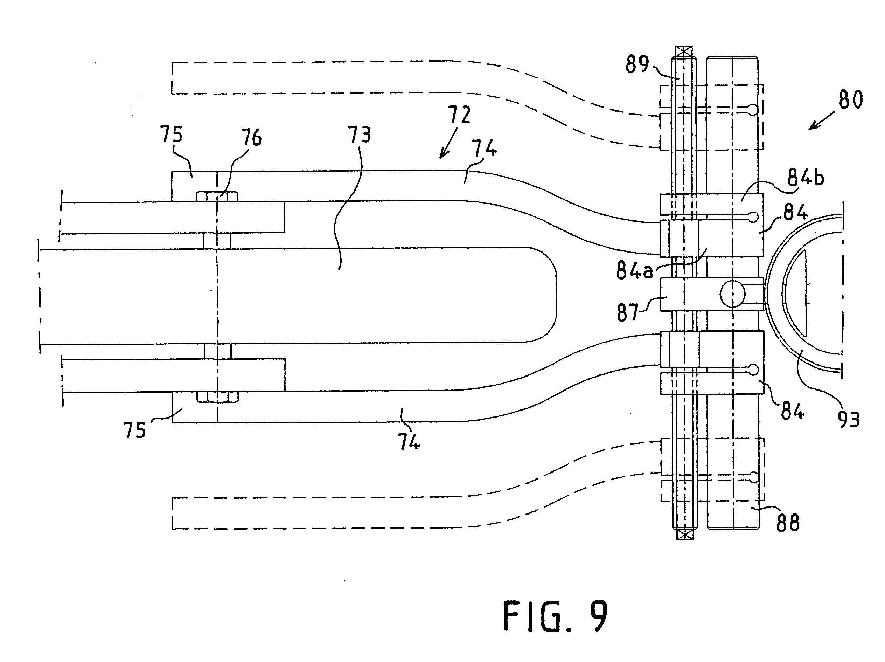

Lesdits moyens d'accrochage 72 forment une pince comprenant deux bras 74 dont les extrémités avant 75 sont conformées de même que dans l'exemple précédent, c'est-à-dire pourvues de mêmes embouts 77 que les embouts 27, pour coopérer avec les extrémités 76, Fig. 9, de l'arbre de rotation de la roue arrière 73 du véhicule deux-roues.

La remorque 71 comprend des moyens de serrage 78 desdits bras 74 et adaptés à maintenir les extrémités avant 75 desdits bras en prise avec les extrémités 76 de l'arbre de rotation de roue arrière du véhicule deux-roues, comme représenté à la Fig. 9, les traits interrompus représentant les bras 74 en position d'ouverture.

Ladite remorque 71 comporte en sa partie avant un support d'attelage 80 comprenant lesdits moyens d'accrochage 72 et lesdits moyens de serrage 78, et en sa partie arrière, un châssis 81 articulé par rapport audit support d'attelage 80 et portant une roue 83 par l'intermédiaire d'une fourche 82.

Chaque bras 74 comporte en son extrémité arrière ou extrémité de base une tête 84 de section élargie transversalement par rapport à sa propre section, et présentant deux trous traversants voisins 85 et 86 axés transversalement.

Ledit support d'attelage 80 comporte une partie centrale 87 dont est solidaire en son milieu une tige ou barre 88 orientée transversalement. Chaque partie de celle-ci est engagée à coulissement dans un trou 85 de la tête 84 du bras 74 de même côté. La partie centrale 87 porte d'autre part, libre en rotation sur elle-même, une seconde tige 89 dont les deux mêmes parties de chaque côté comportent des filetages inversés et sont engagées dans les trous taraudés 86 des têtes 84.

Dans cet exemple, l'ouverture et le serrage de la pince s'effectue donc par simple rotation de la tige 89, et de plus, en position de serrage, un blocage est obtenu par effet de serre-joint entre les têtes 84 et la barre 88, autrement dit de par la position légèrement biaise prise par les têtes 84 par rapport à la tige 88.

Avantageusement, pour renforcer cet effet serre-joint, les têtes 84 sont fendues perpendiculairement aux tiges 88 et 89, de manière à former un U dont la base est à l'opposé de la tige de serrage 89 et permet par élasticité de refermer sous la contrainte les deux jambes 84a et 84b l'une vers l'autre, seule la partie du trou 86 dans la jambe extérieure 84b étant taraudée, l'autre partie du trou 86 dans la jambe intérieure 84a étant un simple passage.

Le châssis 81 de la remorque se compose ici essentiellement d'une cage avant 90 contenant un dispositif amortisseur avant, fixée à une cage arrière 91 portant l'articulation de la fourche 82 de la roue 83, avec son dispositif amortisseur.

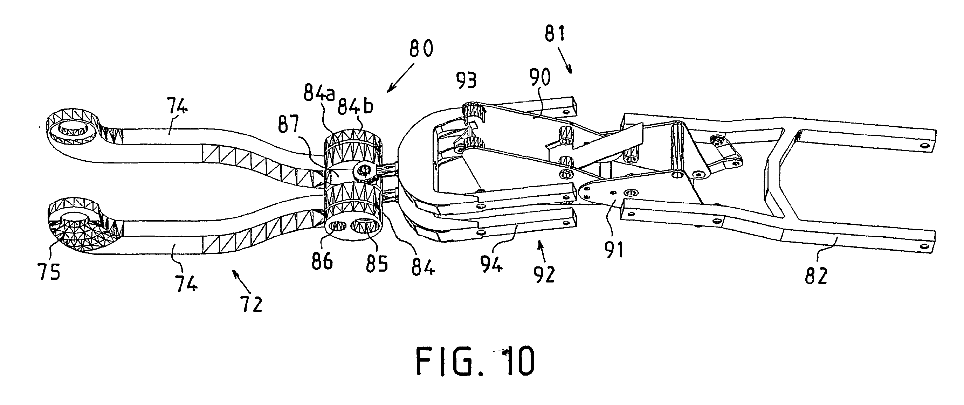

Le dispositif amortisseur avant comporte un système de parallélogramme déformable 92 comprenant un bras supérieur 93 et un bras inférieur 94 connectés respectivement en leur extrémité avant, par une liaison à rotule, à un point haut et un point bas du support d'attelage 80, lesquels points se trouvent ici sur ladite partie centrale 87. Comme le montre la Fig. 10, les bras 93 et 94 ont avantageusement la forme d'une chape dont chacune des branches a son extrémité articulée sur un flasque latéral de la cage 90.

Le parallélogramme 92 ainsi défini est déformable à l'encontre d'un amortisseur 95, non représenté à la Fig. 10, qui est monté ici entre d'une part l'axe d'articulation du bras supérieur 93 dans la cage 90, et d'autre part un axe porté par les têtes de deux mêmes V articulés formés de chaque côté par deux biellettes dont l'une a son extrémité distale articulée sur un axe transversal porté par la cage 90 et l'autre son extrémité distale articulée en un point intermédiaire de l'un des bras 93 et 94, s'agissant du bras supérieur 93 dans l'exemple représenté.

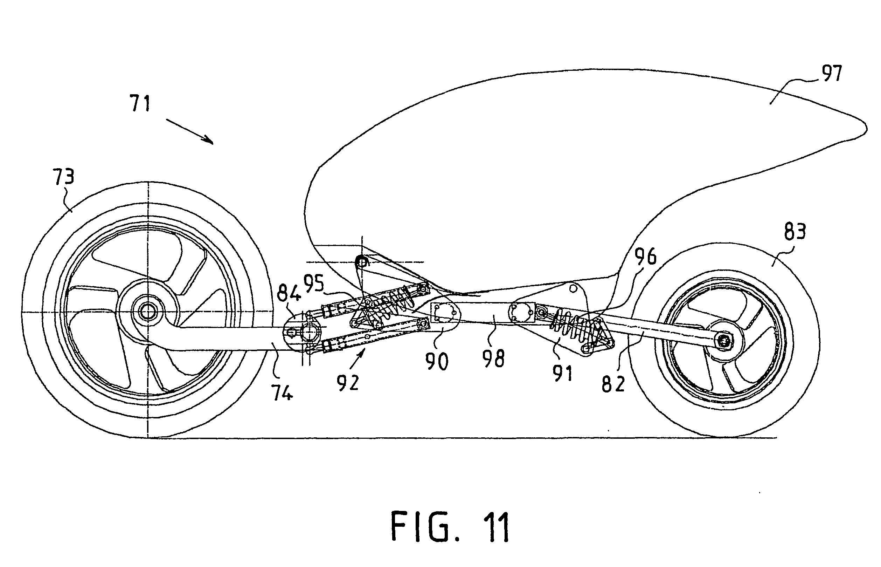

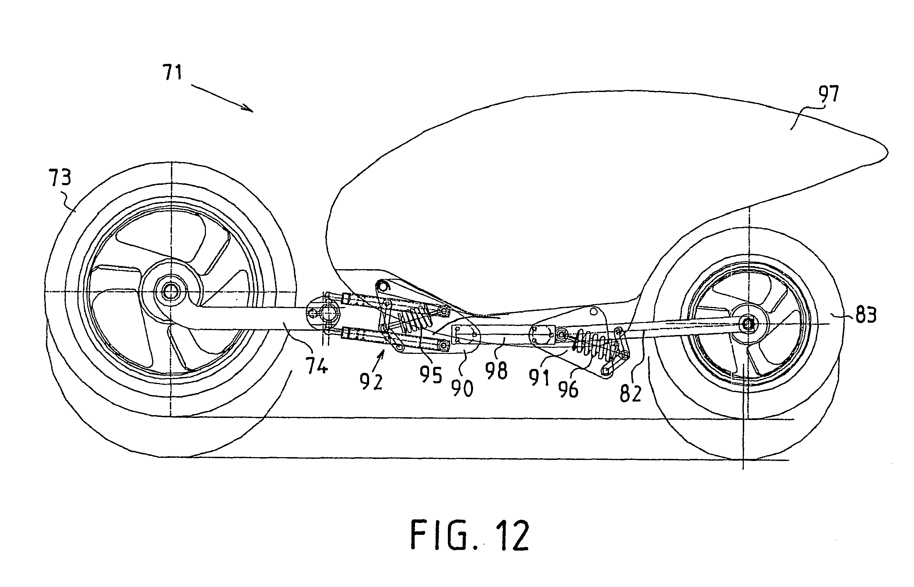

Un dispositif amortisseur similaire, avec des biellettes articulées en V et un amortisseur 96, est associé à la fourche 82 de la roue 83 dans la cage arrière 91. Les Figs. 11 et 12 illustrent respectivement un état stabilisé et un état sous sollicitation des deux dispositifs d'amortisseur avant et arrière de la remorque.

L'ensemble formé par la cage avant 90 et la cage arrière 91 est pourvu d'autre part de moyens pour la fixation de la caisse de remorque 97, s'agissant de préférence de moyens de fixation rapide, tels que représentés schématiquement à la Fig. 8 et aux Figs. 11 et 12, permettant son interchangeabilité. Ces deux dernières illustrent également un système de rallonge de l'ensemble des deux cages 90 et 91, au moyen d'une pièce de liaison intermédiaire 98.

Bien entendu, le système de châssis qui vient d'être décrit est transposable dans les autres modes de réalisation d'une remorque selon l'invention, et inversement.

Avantageusement, dans tous les cas, la remorque selon l'invention ne comporte qu'une seule roue. D'autre part, elle est de préférence pourvue d'amortisseurs de direction entre son châssis et son support d'attelage.

Ainsi, le véhicule deux-roues équipé d'une remorque selon l'invention conserve les possibilités aérodynamiques propres aux véhicules deux-roues.

La présente invention n'est bien entendu pas limitée aux détails de la forme de réalisation qui vient d'être décrite à titre d'exemple, diverses variantes étant à la portée de l'homme de l'art sans sortir du cadre de l'invention. Par exemple, les moyens de serrage des bras de la pince pourront être quelconque.

## Revendications

1. Remorque (1, 21, 71) pour un véhicule deux-roues comprenant des moyens d'accrochage (2, 22, 72) sur le véhicule, lesdits moyens d'accrochage comprenant deux bras (4, 24, 74) venant s'accrocher par leur extrémité avant aux extrémités (6, 26, 76) de l'arbre de rotation de la roue arrière du véhicule, **caractérisée en ce que** lesdits moyens d'accrochage (2, 22, 72) sont agencés sous la forme d'une pince comprenant lesdits deux bras (4, 24, 74) dont les extrémités avant (5, 25, 75) sont conformées pour coopérer avec les extrémités (6, 26, 76) de l'arbre de rotation de la roue arrière (3, 23, 73) du véhicule, et **en ce qu'**elle comporte des moyens de serrage (8, 28, 78) desdits bras (4, 24, 74) adaptés à maintenir les extrémités avant (5, 25, 75) desdits bras (4, 24, 74) en prise avec les extrémités (6, 26, 76) de l'arbre de rotation de la roue arrière (3, 23, 73) du véhicule deux-roues.

2. Remorque (1, 21, 71) selon la revendication 1, **caractérisée en ce que** chaque bras (4, 24, 74) porte en son extrémité avant (5, 25, 75) un embout (7, 27, 77) conformé pour coopérer avec une extrémité (6, 26, 76) de l'arbre de rotation de la roue arrière (3, 23, 73) du véhicule, ledit embout (7, 27, 77) étant démontable et libre en rotation par rapport audit bras articulé (4, 24, 74).

3. Remorque selon la revendication 1 ou 2, **caractérisée en ce qu'**elle comporte en sa partie avant un support d'attelage (12, 30, 80) comprenant lesdits moyens d'accrochage (2, 22, 72) et lesdits moyens de serrage (8, 28, 78), et en sa partie arrière un châssis (14, 32, 81) articulé par rapport audit support d'attelage (12, 30, 80) et portant une roue (57, 83).

4. Remorque selon la revendication 3, **caractérisée en ce que** ledit châssis (32) comporte une poutre (67) comprenant un tronçon avant et un tronçon arrière de sections différentes, les deux tronçons étant adaptés à coulisser l'un dans l'autre donnant audit châssis (32) une structure télescopique, et des moyens de blocage (68) des deux tronçons avant et arrière l'un par rapport à l'autre ; **en ce qu'**elle comporte en outre un coffre (70) porté par ledit châssis (32) ; et **en ce que** ledit coffre (70) comprend un caisson avant (71) et un caisson arrière (72) de sections différentes et adaptés à coulisser l'un dans l'autre, le caisson avant (71) et le caisson arrière (72) étant portés respectivement par le tronçon avant et le tronçon arrière dudit châssis (32).

5. Remorque selon la revendication 3, **caractérisée en ce que** ledit châssis (81) comprend une cage avant (90) contenant un dispositif amortisseur avant, fixée à une cage arrière (91) portant l'articulation de la fourche (82) de la roue arrière (83) avec son dispositif amortisseur.

6. Remorque selon la revendication 5, **caractérisé en ce que** le dispositif amortisseur avant comporte un système de parallélogramme déformable (92) comprenant un bras supérieur (93) et un bras inférieur (94) connectés respectivement en leur extrémité avant, par une liaison à rotule, à un point haut et un point bas du support d'attelage (80).

7. Remorque selon la revendication 5 ou 6, **caractérisée en ce que** l'ensemble formé par la cage avant (90) et la cage arrière (91) est pourvu de moyens pour la fixation rapide d'une caisse de remorque (97).

8. Remorque selon l'une des revendications 5 à 7, **caractérisée en ce qu'**il est prévu une pièce de liaison intermédiaire (98) permettant de rallonger l'ensemble des deux cages (90) et (91).

9. Remorque selon l'une des revendications 1 à 8, **caractérisée en ce que** lesdits bras (4) sont articulés et **en ce que** lesdits moyens de serrage (8) comprennent une sangle (9) adaptée à entourer lesdits bras articulés (4).

10. Remorque selon l'une des revendications 1 à 8, **caractérisée en ce que** ledit support d'attelage (30) comprend deux montants (37) destinés à prendre place de part et d'autre de la roue arrière (23) du véhicule, et **en ce que** chaque bras (24) est articulé à l'un de ces montants (37) en un point intermédiaire (36).

11. Remorque selon la revendication 10, **caractérisée en ce que** lesdits moyens de serrage (28) sont un mécanisme d'écartement desdits bras articulés (24), porté par le support d'attelage (30) et coopérant avec les extrémités arrière des bras (24), et **en ce qu'**ils sollicitent lesdits bras (24) à l'écartement.

12. Remorque selon la revendication 11, **caractérisée en ce que** lesdits moyens de serrage comportent deux cames de manoeuvre (46) solidaires d'un axe de transfert (47) horizontal, respectivement couplées en appui sur les extrémités arrière (45) des deux bras (24), et **en ce que** ladite remorque (21) comporte en outre des moyens d'immobilisation desdites cames (46) sur le support d'attelage (30).

13. Remorque selon l'une des revendications 10 à 12, **caractérisée en ce que** ledit support d'attelage (30) comporte une partie centrale (39) et deux parties mobiles (40) comprenant lesdits montants (37), situées de part et d'autre de ladite partie centrale (39), et adaptées à se déplacer le long d'une tige horizontale de guidage (41) portée par ladite partie centrale (39), ladite partie centrale (39) comportant en outre des moyens de réglage (42) de l'écartement entre lesdites parties mobiles (40).

14. Remorque selon la revendication 13, **caractérisée en ce que** lesdits moyens de réglage d'écartement (42) comprennent une tige filetée (43) portée par ladite partie centrale (39) et adaptée à coopérer avec un taraudage (44) ménagé dans ladite partie mobile (40).

15. Remorque selon la revendication 13 ou 14, **caractérisée en ce qu'**elle comporte un amortisseur (64) entre un bras (65) solidaire d'un mât vertical d'articulation (59) et un bras (66) solidaire de ladite partie centrale (39).

16. Remorque selon l'une des revendications 1 à 8, **caractérisée en ce que** dans son support d'attelage (80), lesdits bras (74) des moyens d'accrochage ont leur extrémité arrière formant une tête (84) montée coulissante sur une tige transversale (88), lesdits moyens de serrage (78) déplaçant symétriquement lesdits bras en écartement ou en rapprochement l'un de l'autre.

17. Remorque selon la revendication 16, **caractérisée en ce que** ledit support d'attelage (80) comporte une partie centrale (87) dont est solidaire en son milieu la tige (88), la partie centrale (87) portant d'autre part, libre en rotation sur elle-même, une tige de serrage (89) dont les deux parties de chaque côté comportent des filetages inversés et sont engagées dans des trous taraudés ((86) desdites têtes (84).

18. Remorque selon la revendication 16 ou 17, **caractérisé en ce que** lesdites têtes (84) sont prévues telles qu'un blocage par effet de serre-joint est obtenu entre elles et la tige (88) au serrage.

## Claims

1. Trailer (1, 21, 71) for a two-wheeler including means (2, 22, 72) for securing on the vehicle, said securing means comprising two arms (4, 24, 74) able to be secured by their front extremity to the extremities (6, 26, 76) of the rotation shaft of the rear wheel of the vehicle, **characterised in that** said securing means (2, 22, 72) are arranged in the form of a clamp including said two arms (4, 24, 74) whose front extremities (5, 25, 75) are shaped so as to cooperate with the extremities (6, 26, 76) of the rotation shaft of the rear wheel (3, 23, 73) of the vehicle, and **in that** it comprises means (8, 28, 78) for tightening said arms (4, 24, 74) and adapted to keep the front extremities (5, 25, 75) of said arms (4, 24, 74) geared with the extremities (6, 26, 76) of the rotation shaft of the rear wheel (3, 23, 73).

2. Trailer (1, 21, 71) according to claim 1, **characterised in that** each arm (4, 24, 74) bears at its front extremity (5, 25, 75) an end piece (7, 27, 77) which has been shaped so as to cooperate with one extremity (6, 26, 76) of the rotation shaft of the rear wheel (3, 23, 73) of the vehicle, said end piece (7, 27, 77) being able to be dismantled and rotates freely with respect to said articulated arm (4, 24, 74).

3. Trailer according to claim 1 or 2, **characterised in that** it comprises at its front portion a coupler support (12, 30, 80) including said securing means (2, 22, 72) and said tightening means (8, 28, 78), and at its rear portion a chassis (14, 32, 81) which is articulated with respect to said coupler support (12, 30, 80) and bearing a wheel (57, 83).

4. Trailer according to claim 3, **characterised in that** said chassis (32) comprises a girder (67) including one front section and one rear section having different sections, the two sections being adapted for one to slide into the other giving said chassis (32) a telescopic structure, and means (68) for locking the two front and rear sections with respect to each other ; **in that** it further comprises a trunk (70) borne by said chassis (32), and **in that** said trunk (70) includes a front box (71) and a rear box (72) having different sections and adapted for one to slide inside the other, the front box (71) and the rear box (72) being respectively borne by the front section and the rear section of said chassis (32).

5. Trailer according to claim 3, **characterised in that** said chassis (81) includes a front cage (90) containing a front damper device fixed to a rear cage (91) bearing the joint of the fork (82) of the rear wheel (83) with its damper device.

6. Trailer according to claim 5, **characterised in that** the front damper device comprises a deformable parallelogram system (92) including one upper arm (93) and one lower arm (94) connected respectively at their front extremity by a pot type joint link to one upper point and one lower point of the coupler support (80).

7. Trailer according to claim 5 or 6, **characterised in that** the unit formed by the front cage (90) and the rear cage (91) is provided with means for fast fixing a trailer box (97).

8. Trailer according to one of claims 5 to 7, **characterised in that** an intermediate linking piece (98) is provided for lengthening the unit constituted by the two cages (90) and (91).

9. Trailer according to one of claims 1 to 8, **characterised in that** said arms (4) are articulated and **in that** said tightening means (8) include a strap (9) adapted to surround said articulated arms (4).

10. Trailer according to one of claims 1 to 8, **characterised in that** said coupler support (30) includes two uprights (37) intended to be situated on both sides of the rear wheel (23) of the vehicle, and **in that** each arm (24) is joined to one of these uprights (37) at an intermediate point (36).

11. Trailer according to claim 10, **characterised in that** said tightening means (28) are constituted by a mechanism for spacing said articulated arms (24), is borne by the coupler support (30) and cooperating with the rear extremities of the arms (24), and **in that** they stress said arms (24) during spacing.

12. Trailer according to claim 11, **characterised in that** said tightening means comprise two control cams (46) integral with a horizontal transfer spindle (47) and respectively coupled in support on the rear extremities (45) of the two arms (24), and **in that** said trailer (21) further comprises means for immobilising said cams (46) on the coupler support (30).

13. Trailer according to one of claims 10 to 12, **characterised in that** said coupler support (30) comprises a central portion (39) and two mobile portions (40) including said uprights (37) situated on both sides of said central portion (39) and adapted to move along a horizontal guide rod (41) borne by said central portion (39), said central portion (39) further comprising means (42) for adjusting the spacing between said mobile portions (40).

14. Trailer according to claim 13, **characterised in that** said spacing adjustment means (42) include a threaded rod (43) borne by said central portion (39) and adapted to cooperate with a female thread (44) fitted in said mobile portion (40).

15. Trailer according to claim 13 or 14, **characterised in that** it comprises a damper (64) between an arm (65) integral with a vertical articulation pole (59) and an arm (66) integral with said central portion (39).

16. Trailer according to one of claims 1 to 8, **characterised in that** in its coupler support (80), said arms (74) of the securing means have their rear extremity forming a head (84) mounted sliding on a transversal rod (88), said tightening means (78) moving said arms symmetrically on spacing or drawing them closer together.

17. Trailer according to claim 16, **characterised in that** said coupler support (80) comprises a central portion (87) in which the rod (88) is integral at its middle, the central portion (87) bearing firstly a freely rotating tightening rod (89) whose two portions on each side comprise inverted threads and are engaged in threaded holes (86) of said heads (84).

18. Trailer according to claim 16 or 17, **characterised in that** said heads (84) are provided so as to obtain a locking via a clamp effect between said heads and the rod (88) on tightening.

## Patentansprüche

1. Anhänger (1, 21, 71) für ein Zweiradfahrzeug, mit Mitteln zum Ankuppeln (2, 22, 72) an das Fahrzeug, wobei die Mittel zum Ankuppeln zwei Arme (4, 24, 74) aufweisen, um mit Hilfe deren vorderen Endes an die Enden (6, 26, 76) der Drehachse des Hinterrads des Fahrzeugs angehängt zu werden, **dadurch gekennzeichnet, dass** die Mittel zum Ankuppeln (2, 22, 72) in Form einer Klemme angeordnet sind, die die zwei Arme (4, 24, 74) aufweist, deren vordere Enden (5, 25, 75) mit den Enden (6, 26, 76) der Drehachse des Hinterrads (3, 23, 73) des Fahrzeugs zusammenwirken, und dass er Spannmittel (8, 28, 78) der Arme (4, 24, 74) aufweist, die geeignet sind, die vorderen Enden (5, 25, 75) der Arme (4, 24, 74) mit den Enden (6, 26, 76) der Drehachse des Hinterrads (3, 23, 73) des Zweiradfahrzeugs in Eingriff zu halten.

2. Anhänger (1, 21, 71) nach Anspruch 1, **dadurch gekennzeichnet, dass** jeder Arm (4, 24, 74) an seinem vorderen Ende (5, 25, 75) ein Anschlussstück (7, 27, 77) trägt, dass dazu eingerichtet ist, mit einem Ende (6, 26, 76) der Drehachse des Hinterrads (3, 23, 73) des Fahrzeugs zusammenzuwirken, wobei das Anschlussstück (7, 27, 77) abmontierbar und frei drehbar in Bezug auf den schwenkbaren Arm (4, 24, 74) ist.

3. Anhänger nach Anspruch 1 oder 2, **dadurch gekennzeichnet, dass** er an seinem vorderen Teil eine Kupplungshalterung (12, 30, 80) aufweist, die die Mittel zum Ankuppeln (2, 22, 72) und die Spannmittel (8, 28, 78) aufweist, und an seinem hinteren Teil ein Gestell (14, 32, 81) aufweist, das in Bezug auf die Kupplungshalterung (12, 30, 80) schwenkbar ist und ein Rad trägt.

4. Anhänger nach Anspruch 3, **dadurch gekennzeichnet, dass** das Gestell (32) einen Träger (67) aufweist, der ein vorderes und ein hinteres Teilstück aus verschiedenen Abschnitten aufweist, wobei die zwei Teilstücke dazu eingerichtet sind, dass eines in das andere gleitet, was dem Gestell (32) eine teleskopartige Struktur verleiht, sowie Sperrvorrichtungen (68) zum Sperren der zwei vorderen und hinteren Teilstücke in Bezug aufeinander; **dadurch**, dass er darüber hinaus einen von dem Gestell (32) getragenen Behälter (70) aufweist; und **dadurch**, dass der Behälter (70) einen vorderen Kasten (71) und einen hinteren Kasten (72) aus verschiedenen Abschnitten aufweist, die dazu eingerichtet sind, dass der eine in den anderen gleitet, wobei der vordere Kasten (71) und der hintere Kasten (72) dementsprechend von dem vorderen Teilstück und dem hinteren Teilstück des Gestells (32) getragen werden.

5. Anhänger nach Anspruch 3, **dadurch gekennzeichnet, dass** das Gestell (81) ein vorderes Gehäuse (90) aufweist, das eine vordere Dämpfungsvorrichtung enthält und an einem hinteren Gehäuse (91) befestigt ist, das das Scharnier der Gabel (82) des Hinterrads (83) mit seiner Dämpfungsvorrichtung trägt.

6. Anhänger nach Anspruch 5, **dadurch gekennzeichnet, dass** die vordere Dämpfungsvorrichtung eine parallelogrammartige, deformierbare Anordnung (92) aufweist, die einen oberen Arm (93) und einen unteren Arm (94) umfasst, die jeweils mit ihrem vorderen Ende, durch ein Kugelgelenk, mit einem oberen und einem unteren Punkt der Kupplungshalterung verbunden sind.

7. Anhänger nach Anspruch 5 oder 6, **dadurch gekennzeichnet, dass** die aus dem vorderen Gehäuse und dem hinteren Gehäuse gebildete gesamte Anordnung mit Mitteln zur schnellen Befestigung eines Anhängerkastens (97) ausgestattet ist.

8. Anhänger nach einem der Ansprüche 5 bis 7, **dadurch gekennzeichnet, dass** ein Zwischenbindungsstück (98), das ein Verlängern der gesamten Anordnung der zwei Gehäuse (90) und (91) gewährleistet, vorgesehen ist.

9. Anhänger nach einem der Ansprüche 1 bis 8, **dadurch gekennzeichnet, dass** die Arme (4) schwenkbar sind und **dadurch**, dass die Spannmittel (8) einen Gurt (9) aufweisen, der die schwenkbaren Arme (4) umschließen kann.

10. Anhänger nach einem der Ansprüche 1 bis 8, **dadurch gekennzeichnet, dass** die Kupplungshalterung (30) zwei Stützen (37) umfasst, die dazu vorgesehen sind, an beiden Seiten des Hinterrads (23) des Fahrzeugs zu liegen, und **dadurch**, dass jeder Arm (24) an eine der Stützen (37) an einem Zwischenpunkt angelenkt ist.

11. Anhänger nach Anspruch 10, **dadurch gekennzeichnet, dass** die Spannmittel (28) einen Mechanismus zum Abstandhalten zwischen den schwenkbaren Armen (24) aufweisen, der von der Kupplungshalterung (30) getragen wird und mit den hinteren Enden der Arme (24) zusammenwirkt, und **dadurch**, dass sie die Arme (24) in einem Abstand halten.

12. Anhänger nach Anspruch 11, **dadurch gekennzeichnet, dass** die Spannmittel zwei Bedienungsnocken (46) aus einem Stück einer horizontalen Transferachse (47) aufweisen, die jeweils auf die hinteren Enden (45) der zwei Arme (24) gestützt verbunden sind, und **dadurch**, dass der Anhänger (21) darüber hinaus Mittel zur Immobilisierung der Nocken (46) auf der Kupplungshalterung (30) umfasst.

13. Anhänger nach einem der Ansprüche 10 bis 12, **dadurch gekennzeichnet, dass** die Kupplungshalterung (30) einen zentralen Teil (39) und zwei bewegliche Teile (40) mit den Stützen (37) aufweist, die beiderseits des zentralen Teils gelegen sind, und dazu eingerichtet sind, längs eines horizontalen Führungsgestänges bewegt zu werden, das von dem zentralen Teil (39) getragen wird, wobei der zentrale Teil (39) darüber hinaus Mittel (42) zur Abstandsregulierung zwischen den beweglichen Teilen (40) umfasst.

14. Anhänger nach Anspruch 13, **dadurch gekennzeichnet, dass** die Mittel (42) zum Regulieren des Abstands eine Gewindestange (43) aufweisen, die von dem zentralen Teil (39) getragen wird und dazu eingerichtet ist, mit einem im mobilen Teil (40) vorgesehenen Innengewinde zusammenzuwirken.

15. Anhänger nach Anspruch 13 oder 14, **dadurch gekennzeichnet, dass** er eine Dämpfungsvorrichtung (64) zwischen einem Arm (65) aus einem Stück eines vertikalen Gelenkstiels (59) und einem Arm (66) aus einem Stück des zentralen Teils (39) aufweist.

16. Anhänger nach einem der Ansprüche 1 bis 8, **dadurch gekennzeichnet, dass**, in seiner Kupplungshalterung (80), die Arme (74) der Mittel zum Ankuppeln ein hinteres Ende aufweisen, das einen Kopf (84) bildet, der verschiebbar auf einem transversalen Gestänge (88) montiert ist, wobei die Spannmittel (78) die Arme jeweils zueinander symmetrisch zur Abstandbildung oder zur Annäherung bewegen.

17. Anhänger nach Anspruch 16, **dadurch gekennzeichnet, dass** die Kupplungshalterung (80) einen zentralen Teil (87) aufweist, der mit dem Gestänge (88) in seiner Mitte fest verbunden ist, wobei der zentrale Teil (87) andererseits ein, frei um sich selbst drehbares, Spanngestänge (89) trägt, bei dem die zwei Teile jeder Seite inverse Gewinde umfassen und mit den Gewindebohrungen (86) der Köpfe (84) in Eingriff stehen.

18. Anhänger nach Anspruch 16 oder 17, **dadurch gekennzeichnet, dass** die Köpfe (84) dazu vorgesehen sind, dass eine Sperre mittels einer Klemmvorrichtung zwischen ihnen und dem Spanngestänge (88) erhalten wird.
